# EUROPÄISCHE PATENTSCHRIFT

(11) **EP 3 778 439 B1**
(45) Veröffentlichungstag und Bekanntmachung des Hinweises auf die Patenterteilung: **23.08.2023**
(21) Anmeldenummer: 20200361.2
(22) Anmeldetag: 20.04.2011
(51) Int. Cl.: B65G 47/08, B65G 47/51, B65G 47/84, B65G 54/02

(54) **BEHÄLTERBEHANDLUNGSANLAGE UND TRANSPORTVERFAHREN FÜR BEHÄLTERBEHANDLUNGSANLAGE**
CONTAINER HANDLING INSTALLATION AND TRANSPORTING METHOD FOR CONTAINER HANDLING INSTALLATION
INSTALLATION DE TRAITEMENT DES RÉCIPIENTS ET PROCÉDÉ DE TRANSPORT POUR L'INSTALLATION DE TRAITEMENT DES RÉCIPIENTS

(30) Priorität: 22.04.2010 DE 102010018153
(43) Veröffentlichungstag der Anmeldung: 17.02.2021
(62) Teilanmeldung aus: 17154956.1
(73) Patentinhaber: KRONES AG, 93073 Neutraubling (DE)
(72) Erfinder: Senn, Konrad, 93073 Neutraubling (DE); Hahn, Wolfgang, 93073 Neutraubling (DE)
(74) Vertreter: Bittner, Bernhard

(56) Entgegenhaltungen:
- EP-A1- 0 496 046
- EP-A1- 0 769 459
- EP-A1- 1 123 886
- EP-A1- 1 327 591
- EP-A1- 1 645 340
- EP-A2- 1 767 474
- EP-A2- 2 301 867
- WO-A2-03/047977
- DE-A1- 4 133 114
- US-A- 5 161 664
- US-A- 5 261 520
- US-A1- 2003 230 941

## Beschreibung

Die Erfindung bezieht sich auf ein Transportverfahren für eine Behälterbehandlungsanlage sowie eine Behälterbehandlungsanlage mit einer Transporteinrichtung.

Bei Behälterbehandlungsanlagen werden Vorformlinge aus Kunststoff, wie beispielsweise Polyethylenterephthalat (PET), Polypropylen (PP) usw., zu Behältern umgeformt, wie beispielsweise Flaschen, und anschließend etikettiert, gefüllt, verpackt usw. Zu diesem Zweck werden die auf einem Transportpfad durch die Behälterbehandlungsanlage transportierten Vorformlinge in einer Heizvorrichtung erwärmt, damit sie dann in einer Streckblasvorrichtung mittels eines Streckblasvorgangs zu Kunststoffbehältern expandiert und gestreckt werden können. Anschließend werden die Kunststoffbehälter mittels eines Transportsystems zu weiteren Behandlungsvorrichtungen, wie beispielsweise einer Reinigungsvorrichtung, einer Etikettiervorrichtung, einer Füllvorrichtung, einer Sortiervorrichtung, einer Verpackungsvorrichtung, usw. transportiert.

Die hierbei verwendeten Transportsysteme sind sogenannte Neckhandling-Systeme, bei welchen eine Halteklammer des Transportsystems über- bzw. unterhalb eines Tragrings der Vorformlinge bzw. des expandierten Behälters greift, um den jeweiligen Vorformling bzw. expandierten Behälter an dem Transportsystem zu halten und so durch die Behälterbehandlungsanlage zu transportieren. Üblicherweise sind die Halteklammern sternförmig um eine Antriebsachse befestigt, so dass auch von einem Transportstern gesprochen wird. Aufgrund einer solchen Anordnung um die Antriebsachse führen die Halteklammern im Allgemeinen eine kreisförmige oder zumindest annähernd kreisförmige Bewegung aus. Hierbei wird zwischen starren Transportsternen, Schiebetransportsternen und Teilverzugstransportsternen unterschieden. Bei starren Transportsternen folgen die Halteklammern starr der Kreisbahn bzw. der durch den Transportstern vorgegebenen Transportbahn. Bei Schiebetransportsternen können die Halteklammern teilweise die durch den Transportstern vorgegebene Transportbahn verlassen. Und bei Teilverzugstransportsternen können die Halteklammern auch die Teilungsweite auf der durch den Transportstern vorgegebenen Transportbahn verlassen.

Allen diesen herkömmlichen Transportsystemen ist jedoch gemeinsam, dass alle Halteklammern demselben Weg-Zeit-Profil folgen und die Transportbahn im Wesentlichen kreisförmig ist. Dies ist insbesondere bei einem Transportsystem zwischen einer Heizeinrichtung für Vorformlinge und einer Streckblaseinrichtung in einem Fall unvorteilhaft, bei welchem große Vorformlinge geheizt werden sollen. In einem solchen Fall muss die Heizeinrichtung langsamer laufen als bei kleineren Vorformlingen, wohingegen die nachfolgende Streckblaseinrichtung bei beiden Vorformlinggrößen gleich schnell laufen kann, da bei den großen Vorformlingen beispielsweise nur jede zweite Blasform der Streckblaseinrichtung mit den erwärmten großen Vorformlingen bestückt wird.

EP 1 645 340 A1 beschreibt eine Sortiervorrichtung und Fördervorrichtung für Stückgut, bei welchen Haltevorrichtungen zum Halten des Stückguts an einzelnen Transporteinheiten angeordnet sind, die einzeln steuerbar sind, damit sie von einer Aufnahmestelle zu einer auswählbaren Abgabestelle geleitet werden können. Hiermit kann an den Haltevorrichtungen gehaltenes Stückgut entlang einer im Wesentlichen kreisförmigen Transportbahn transportiert werden und von dieser je nach Art des gehaltenen Stückguts auf Nebentransportbahnen umgeleitet und somit sortiert werden. Die Nebentransportbahnen sind für spezielle Arten von Stückgut vorgehalten, um das Stückgut zu der für es vorgesehenen Abgabestelle zu leiten. Eine solche Sortiervorrichtung und Fördervorrichtung hält jedoch weiter an dem festen Weg-Zeit-Profil der Transporteinheiten auf der Transportbahn fest, da sie auch kein anderes benötigt, und entspricht somit in etwa dem zuvor erwähnten Schiebestern. Daher kann das zuvor als Beispiel genannte Problem des Wechsels von kleinen auf großen Vorformlingen und umgekehrt nicht gelöst werden.

DE 41 33 114 A1 zeigt ein Fördersystem für Stückgut, wie Flaschen, Behälter oder dergleichen, welches eine als Langstatormotor gebildete Förderbahn mit stationären elektrischen/elektronischen Komponenten und bürstenlosen Läufern zur Förderung der Stückgüter aufweist. Die Förderbahn führt das Stückgut an mehreren hintereinander angeordneten Bearbeitungsstationen vorbei oder durch sie hindurch. Ein solches Fördersystem ist durch die Ausbildung seiner gesamten Förderbahn als Langstatormotor deutlich teurer in der Anschaffung und Wartung als die zuvor beschriebenen Transportsterne. EP1327591A1 offenbart eine Behälterbehandlungsanlage nach dem Oberbegriff des Anspruchs 1.

Es ist daher Aufgabe der Erfindung, eine Behälterbehandlungsanlage und ein Transportverfahren für eine Behälterbehandlungsanlage zur Verfügung zu stellen, welche kostengünstig ermöglichen, dass die Behandlungsvorgänge von zwei verschiedenen Behälterbehandlungsvorrichtungen einer Behälterbehandlungsanlage unabhängig voneinander ausgeführt werden können.

Die Aufgabe wird durch eine Behälterbehandlungsanlage nach Patentanspruch 1 gelöst. Die Transporteinrichtung dient zum Transport von Behältern in einer Behälterbehandlungsanlage, die eine erste Behälterbehandlungsvorrichtung zur Behandlung von Behältern und eine zweite Behälterbehandlungsvorrichtung aufweist, welche nach der ersten Behandlungsvorrichtung angeordnet ist und zur Behandlung der Behälter nach einer Behandlung durch die erste Behälterbehandlungsvorrichtung dient. Die Transporteinrichtung umfasst eine Transportbahn, die mit ihrer gesamten Länge zwischen der ersten und zweiten Behälterbehandlungsvorrichtung angeordnet ist und entlang welcher die Behälter von der ersten Behälterbehandlungsvorrichtung zu der zweiten Behälterbehandlungsvorrichtung transportierbar sind, und mindestens ein Transportelement, das an - und insbesondere auch bezüglich bzw. relativ zu der Transportbahn bewegbar - angeordnet bzw. gelagert ist, zum Halten und Transportieren eines Behälters. Hierbei sind bevorzugt die Transportbahn und das mindestens eine Transportelement derart ausgestaltet, dass das mindestens eine Transportelement auf seinem Weg zwischen der ersten und zweiten Behälterbehandlungsvorrichtung wenigstens zeitweise einen Geschwindigkeitsunterschied eines Transports der Behälter in der ersten und zweiten Behälterbehandlungsvorrichtung ausgleichen kann.

Hierunter wird verstanden, dass die Transporteinrichtung zwar technisch dazu in der Lage ist, die Geschwindigkeitsunterschiede auszugleichen, aber dies nicht notwendigerweise bei allen Anwendungen stets erforderlich ist.

Vorteilhaft ist die Transportbahn in im Wesentlichen beliebigen geometrischen Formen ausgestaltbar. So wäre es beispielsweise denkbar, dass bei bestimmten Anwendungen zwar kein Geschwindigkeitsunterschied ausgeglichen werden soll, dafür aber eine spezielle geometrische Form der Transportbahn benötigt wird.

Vorteilhafte weitere Ausgestaltungen der Transporteinrichtung sind in den abhängigen Patentansprüchen angegeben.

Vorzugsweise umfasst die Transportbahn mindestens eine Pufferstrecke, in welche mindestens eins des mindestens einen Transportelements laufen kann, um die Dichte der Transportelemente an der Transportbahn zu verändern. So wäre es beispielsweise möglich, das System als Puffer auszuführen bei dem viele einzelne Läufer in eine Pufferstrecke laufen und je nach Läuferdichte sich unterschiedlich viele Läufer in der Pufferstrecke befinden.

Es ist Teil der Erfindung, die Transportbahn mit Wicklungen zu versehen die einzeln ansteuerbar sind und die Transportelemente mit Dauermagneten auszurüsten. Hierbei werden die einzelnen Transportelemente möglichst kostengünstig gehalten. Bevorzugt ist bei einem solchen System an der Transportbahn eine Einheit angebracht, um die Lage wenigstens eines Transportelements und bevorzugt aller Transportelemente zu ermitteln und an die Steuerung weiter zu geben.

Bei einer weiteren Ausführungsform sind die Transportelemente mit elektrischen Wicklungen versehen welche die Magnetkraft die für den Antrieb notwendig ist aufbringen und die Transportbahn wird mit Dauermagneten bzw. nicht schaltenden Elektromagneten versehen. Hierbei kann die für den Antrieb nötige elektrische Energie als auch für die Steuerung nötige Signale via Induktionsübertragung auf die Einzelnen Transportelemente übertragen werden. Die Steuerung kann sich dezentral auf den einzelnen Transportelementen befinden als auch zentral in einer Steuereinheit verarbeitet werden.

Es ist vorteilhaft, wenn die Transportbahn als Magnetschwebetrasse einer Magnetschwebebahn ausgebildet ist. Hierbei kann das mindestens eine Transportelement voll magnetisch an der Transportbahn gelagert sein, oder das mindestens eine Transportelement kann teilweise magnetisch und teilweise mechanisch an der Transportbahn gelagert sein. Hierbei ist es möglich, dass das mechanische Lagern des mindestens einen Transportelements an der Transportbahn mittels Gleitlager und/oder Rollen ausgeführt ist.

Vorteilhaft weist die Vorrichtung eine Vielzahl von Transportelementen auf, die sich an und bevorzugt auch relativ bezüglich der Transportbahn bewegen. Vorteilhaft sind dabei die Bewegungen dieser Transportelemente unabhängig voneinander steuerbar.

Erfindungsgemäß werden die Transportelemente zumindest zeitweise mittels einer magnetischen Kraft angetrieben. Dies steht im Gegensatz zu den bisher bekannten Vorgehensweisen, bei denen die Transportelemente üblicherweise an sich drehenden Trägern angeordnet sind. Vorzugsweise umfasst die Transporteinrichtung zudem ein Band zum Antrieb des mindestens einen Transportelements an Strecken der Transportbahn, an welchen das mindestens eine Transportelement mit konstanter Geschwindigkeit bewegt wird. Bei dieser Bewegung kann es sich beispielsweise um eine Rückführbewegung handeln, um die nicht mit Behältnissen oder anderem Stückgut besetzten Transportelemente wieder zurück zu der ersten Behälterbehandlungsvorrichtung zu transportieren.

Die Transportbahn kann eine beliebige Form haben. Bevorzugt weist die Transportbahn einen geschlossene Form auf.

Bei einer weiteren vorteilhaften Ausführungsform weißt die Vorrichtung, d.h. insbesondere die Transporteinrichtung eine Dreheinrichtung auf, welche die Behältnisse bezüglich deren Längsachse oder hinsichtlich einer zu dieser Längsachse parallelen Achse um einen vorgegebenen Drehwinkel dreht.

Diese Ausführungsform eignet sich insbesondere für solche Behältnisse, welche einen Querschnitt aufweisen, der von einem kreisförmigen Querschnitt abweicht, wie beispielsweise rechteckige oder ovale Behältnisse. Derartige Behältnisse werden in der Regel in Längsrichtung mittels eines Lufttransports an einen Füller weitergegeben. Ein Quertransport derartiger Behältnisse wird vermieden, da sich in einem Lufttransporteur die Behältnisse leicht verdrehen können und dies zu Störungen führt. Aus dem internen Stand der Technik der Anmelderin ist es bekannt, Abweichungen von der Längsausrichtung beim Transfer vom Auslauf, beispielsweise aus einer Blasmaschine zu einer Fülleinrichtung durch Führungselemente zu korrigieren. Dabei bleibt jedoch die Längsausrichtung beibehalten. Dies führt dazu, dass die längere Seite des Behältnisses die Teilung in einer Fülleinrichtung bzw. einer nachfolgenden Maschine wie einer Etikettiermaschine, einer Inspektionsmaschine, einem Sterilisator oder dergleichen bestimmt. Weiterhin ist ein weiterer Nachteil der Einsatz von diversen Formatteilen für jede einzelne Behältnissorte.

Bei einer vorteilhaften Ausführungsform handelt es sich hier bei der ersten Behandlungseinrichtung um eine Blasmaschine, welche Kunststoffvorformlinge zu Kunststoffbehältnissen umformt und bei einer zweiten Behandlungsvorrichtung um eine Füllmaschine, welche die Behältnisse füllt oder eine Etikettiermaschine.

Es ist weiterhin aus dem Stand der Technik bekannt, die Drehungen der Behältnisse von einem Längs- auf einen Quertransport innerhalb eines Lufttransports im Einlauf eines Füllers durchzuführen. Dazu werden im Lufttransport, beispielsweise mit einer Schnecke, im Einlauf der Maschine die Behältnisse gedreht. Auf diese Weise ist es zwar möglich, eine Fülleinrichtung auf den Quertransport der Behältnisse auszulegen, es wird jedoch ein Lufttransporteur benötigt. Derartige Lufttransporteure sind jedoch störungsanfällig und insbesondere für den Einsatz in einer Blockung ungeeignet.

Bei dieser Ausführungsform wird daher vorgeschlagen, insbesondere beim Transfer eines Behältnisses in einem Block, beispielsweise einer Blockung zwischen einer Blasmaschine und einem Füller, zwischen einer Blasmaschine und einer Etikettiermaschine und einem Füller oder auch einer Blasmaschine, einem Füller und einer Etikettiermaschine (jeweils in dieser Reihenfolge) die Behältnisse nach der Blasmaschine so zu drehen, dass die Behältnisse in der oder den nachfolgenden Maschine(n) im Querverlauf bearbeitet werden können. Daher erfolgt insbesondere der Transfer anders als in einem Lufttransport formschlüssig (z. B. mittels Greifelementen). Das Handling für die Behältnisse wird auf diese Weise sicherer und es können weiterhin auch Störungen während des Transfers vermieden werden.

Vorteilhaft erfolgt daher die besagte Drehung während eines Transports der Behältnisse. Vorteilhaft ist die Dreheinrichtung derart gestaltet, dass die Behältnisse um einen Winkel von ca. 90° gedreht werden. Auf diese Weise können, wie oben erwähnt, die Behältnisse quer der zweiten Behandlungsvorrichtung zugeführt werden. Vorteilhaft werden dabei die einzelnen Behältnisse individuell gedreht.

Grundsätzlich wäre es dabei möglich, dass der Transfer der Behältnisse mittels einer Kette mit Neckhandlingklammern erfolgt. Es ist jedoch auch möglich, dass hier der Transfer der Behältnisse durch einen Lineartransport und insbesondere die oben beschriebene magnetische Bewegung der einzelnen Führungselemente erfolgt. Bevorzugt erfolgt die Drehung der Behältnisse gleichzeitig, d.h. während deren Transport und besonders bevorzugt, wie ausgeführt, um ca. 90°. Dabei kann ein zusätzlicher regelbarer Antrieb vorgesehen sein. Dieser zusätzliche Antrieb kann dabei zum individuellen Drehen jedes einzelnen Behältnisses verwendet werden.

Dabei ist neben dem Transfer auch dieser zusätzliche Antrieb als Linearantrieb vorstellbar. Es wäre auch möglich, dass diese individuelle Drehung der einzelnen Behältnisse durch eine Differenzgeschwindigkeit erfolgt. Dabei kann während der Drehung der Behältnisse eine Klammer, welche die Behältnisse greift, so gesteuert oder gelockert werden, dass eine Drehung trotz eines Formschlusses ermöglicht wird. So könnte die Klammer so weit geöffnet werden, dass der Tragring der Behältnisse zwar noch nicht durch die Klammer durchrutschen kann, aber gleichzeitig eine Drehbarkeit des Behältnisses gegenüber der Klammer möglich ist.

Wenn die Behältnisse der Fülleinrichtung quer zugeführt werden, ist es möglich, die Füllerteilung kleiner zu wählen. Durch diese Weise kann der Füller in seiner Gesamtheit kleiner und damit kostengünstiger ausgelegt werden.

Daneben ist es auch möglich, dass eine Umstellung auf andere Behältnissorten, beispielsweise auf runde Behältnissorten, insbesondere durch die Anwahl eines anderen Steuerungsprogramms leicht automatisiert werden kann. Ein Ausbau oder ein Verstellen, beispielsweise von Schnecken oder anderen Einrichtungen wie im Stand der Technik, ist so nicht erforderlich.

Weiterhin könnte die besagte Drehung auch zum gezielten Ausrichten der Behältnisse nach einer Blasmaschine verwendet werden. Eine derartige Ausrichtung kann dabei beispielsweise auf ein Ornament oder andere Merkmale für die nachfolgende Etikettierung erfolgen. Vorteilhaft ist für eine derartige Ausregelung wenigstens eine Sensoreinrichtung bzw. eine Erkennung wie ein Sensor oder Kameras vorgesehen, die bevorzugt wenigstens einen Bereich der Behältnisse erfassen. Durch eine derartige Ausrichtung im Transferbereich ist es möglich, dass eine aufwendige Ausrichtung in der nachfolgenden Etikettiermaschine eingespart werden kann.

Es wäre weiterhin auch möglich, mehrere dieser Dreheinrichtungen, beispielsweise auch an unterschiedlichen Bereichen innerhalb einer Blockanlage, vorzusehen. So wäre es möglich, eine exakte Ausrichtung zu einem Längslauf für das gezielte Etikettieren mit Selbstklebeetikett mittels einem Ornament auf der Rückseite einer Breitseite des Behältnisses durchzuführen. Nach dem Etikettiervorgang könnte eine Ausrichtung zu einer Fülleinrichtung erfolgen, um einen Querlauf in der Fülleinrichtung zu erreichen.

Bei einer weiteren vorteilhaften Ausführungsform sind die erste Behandlungsvorrichtung und die zweite Behandlungsvorrichtung miteinander geblockt. So kann beispielsweise der Transfer der Behältnisse in einem Block zwischen einer Blasmaschine und einem Füller mit den hier beschriebenen auf Läufer befestigten Greifelementen erfolgen, die insbesondere auf einer magnetischen Bahn bewegt werden. Der Vorteil dieser Ausführungsform besteht darin, wie oben erwähnt, dass jeder Läufer bzw. jedes Füllerelement individuell bewegt werden kann (wobei hierbei ein ähnliches Wirkprinzip über einen Linearmotor zugrunde gelegt wird).

Bei einer weiteren vorteilhaften Ausführungsform ist entlang der Transportbahn eine weitere Behandlungseinheit für die Behältnisse angeordnet. Insbesondere durch die Individuelle Steuerung der einzelnen Förderelemente ist es hier möglich, dass die Behältnisse an dieser weiteren Behandlungseinheit oder auch mehreren Behandlungseinheiten bzw. einem Zusatzaggregat oder mehreren Zusatzaggregaten länger verweilen, wobei dieses Zusatzaggregat oder diese Zusatzaggregate insbesondere zwischen einer Blasmaschine und einer Fülleinrichtung angeordnet sein kann/können. Neben einer seriellen Anordnung ist auch eine parallele Anordnung der Einheiten/Aggregate oder auch eine beliebige Kombination serieller und paralleler Anordnungen denkbar. Dabei können die Läufer individuell über ein Weichensystem zu- und abgeführt werden.

So kann es sich beispielsweise bei der Behandlungseinheit um eine Kühleinrichtung oder um mehrere Kühleinrichtungen zum Kühlen der Behältnisse handeln. Dabei ist es möglich, dass die Kühlstrecke kürzer ausgeführt wird als im Stand der Technik und die Behältnisse entsprechend langsamer durch diese Kühlstrecke transportiert werden. Daneben kann es sich bei der weiteren Behandlungseinheit auch um eine Inspektionseinrichtung zum Inspizieren der Behältnisse handeln. Auch hier kann durch den individuellen Transport mit den einzelnen Förderelementen die Zeit für die Inspektion verlängert werden.

Bei einer weiteren vorteilhaften Ausführungsform kann auch wenigstens ein Antrieb und besonders vorteilhaft ein zusätzlicher Antrieb an oder auf einem Transportelement vorgesehen sein.

Bei einer weiteren Ausführungsform handelt es sich bei der weiteren Behandlungseinheit um eine Sterilisationseinheit zum Sterilisieren der Behältnisse. Auch hier ist es möglich, die Zeit für die Sterilisation durch einen entsprechend langsameren Transport zu verlängern.

Daneben ist es auch möglich, dass es sich bei der weiteren Behandlungseinheit um eine Datierungseinrichtung handelt, welche ein Datum auf den Behältnissen anbringt. Auch kann es sich bei der weiteren Behandlungseinheit bereits um eine Etikettiermaschine handeln, die, wie erwähnt, entlang der Transportbahn angeordnet ist. Auch kann es sich bei der weiteren Behandlungseinheit um eine Bedruckungseinheit handeln, welche die Behältnisse mit einem Aufdruck versieht.

Weiterhin wäre es auch möglich, dass entlang der Transportbahn mehrere der genannten Behandlungseinheiten angeordnet sind.

Bei einer weiteren Ausführungsform ist es auch möglich, dass es sich bei der besagten weiteren Behandlungseinheit um eine Dreheinrichtung handelt, welche die Kunststoffbehältnisse, insbesondere bezüglich ihrer Längsachse, dreht. Auch wäre es möglich, dass der Transfer, bzw. die Transferstrecke zur besseren Anpassung von Zusatzaggregaten auch verlängert wird, indem insbesondere von einer direkten Verbindung zwischen den Behandlungsvorrichtungen abgewichen wird.

Zur Erreichung von zusätzlichen Bewegungen wäre es auch denkbar, die jeweiligen Läufe bzw. Förderelemente mit zusätzlichen Antrieben, insbesondere Servoantrieben, auszustatten. In Frage kommen hier beispielsweise Linear- oder Drehantriebe, um die Greifelemente auf diesen Antrieben zu befestigen. Auf diese Weise sind überlagerte Bewegungen möglich, die zum Beispiel einen größeren Abstand der Magnetbahn zu einer Blasform und eine günstigere Anpassung einer Greifbewegung bei der Entnahme des Behältnisses ermöglichen.

Dabei wäre es denkbar, dass eine Energieübertragung berührungslos bzw. kabellos erfolgt. Daneben wäre es auch denkbar, eine insbesondere ausfahrbare Abstützung für ein insbesondere nicht rotationssymmetrisches Behältnis bei der Entnahme aus der Blasform vorzusehen, um ein nicht definiertes Verdrehen des Behältnisses zu vermeiden und um auf diese Weise eine Ausrichtvorrichtung entfallen zu lassen. Eine derartige Zusatzbewegung könnte zur Ausleitung von Behältnissen verwendet werden. Auf diese Weise ist es möglich, auf aufwendige mechanische Konstruktionen, wie beispielsweise Lagerungen, Antrieb und einen Teilungsverzug für die jeweiligen Transportsterne zu verzichten. Weiterhin werden auf diese Weise die Übergabestellen der Behältnisse von einer Transporteinrichtung zur nächsten, beispielsweise einem Transportstern zum nächsten vermieden. Daneben ist es so auch möglich, Zusatzaggregate besser anpassbar und kostengünstiger auslegbar zu gestalten.

Bei einer weiteren vorteilhaften Ausführungsform ist es denkbar, dass ein Sterilraum vorgesehen wird, innerhalb dessen die Behältnisse von der Transportvorrichtung transportiert werden. So könnte beispielsweise die Transportbahn von einem ringförmigen und/oder insbesondere auch kanalartigen Sterilraum umgeben sein, wobei die Größe des Sterilraums vorzugsweise derart angepasst ist, dass einerseits die Behältnisse durch diesen Sterilraum gefördert werden können und andererseits die Größe des Sterilraums die Abmessungen der Behältnisse nicht wesentlich übersteigt, sodass ein Reinraumvolumen eingespart werden kann. Dabei wäre es denkbar, dass lediglich diejenige Strecke von dem Reinraum besetzt ist, durch den tatsächlich Behältnisse gefördert werden, es wäre jedoch auch denkbar, dass wie erwähnt gesamte Transportbahn sich durch den Reinraum erstreckt, um auf diese Weise insbesondere eine Kontamination der jeweiligen Greifelemente bzw. Förderelemente, zu vermeiden. Auch könnte sich ein derartiger Reinraum auch bis hin zu einer Fülleinrichtung und auch bereits ausgehend von der Blasmaschine erstrecken. Auf diese Weise ist eine sterile Behandlung des Behältnisses ausgehend von dessen Herstellung bis zum Abschluss des Füll- und Verschließvorgangs denkbar.

Die Behälterbehandlungsanlage umfasst eine erste Behälterbehandlungsvorrichtung zur Behandlung von Behältern, eine zweite Behälterbehandlungsvorrichtung, welche nach der ersten Behandlungsvorrichtung angeordnet ist und zur Behandlung der Behälter nach einer Behandlung durch die erste Behälterbehandlungsvorrichtung dient, und eine Transporteinrichtung wie zuvor beschrieben.

Die Aufgabe wird zudem durch ein Transportverfahren nach Patentanspruch 9 gelöst, welches zum Transport von Behältern in einer Behälterbehandlungsanlage dient, die eine erste Behälterbehandlungsvorrichtung zur Behandlung von Behältern und eine zweite Behälterbehandlungsvorrichtung aufweist, welche nach der ersten Behandlungsvorrichtung angeordnet ist und zur Behandlung der Behälter nach einer Behandlung durch die erste Behälterbehandlungsvorrichtung dient. Das Verfahren umfasst die Schritte: Transportieren der Behälter entlang einer Transportbahn, die mit ihrer gesamten Länge zwischen der ersten und zweiten Behälterbehandlungsvorrichtung angeordnet ist, von der ersten Behälterbehandlungsvorrichtung zu der zweiten Behälterbehandlungsvorrichtung mittels mindestens eines Transportelements, das an der Transportbahn bewegbar angeordnet bzw. gelagert ist und einen Behälter hält, und bevorzugt Ausgleichen eines Geschwindigkeitsunterschieds eines Transports der Behälter in der ersten und zweiten Behälterbehandlungsvorrichtung auf dem Weg des mindestens einen Transportelements zwischen der ersten und zweiten Behälterbehandlungsvorrichtung.

Bevorzugt findet ein Ändern der Relativgeschwindigkeit des Transportelements bezüglich der Transportbahn statt.

Nachfolgend wird die Erfindung unter Bezugnahme auf die beiliegende Zeichnung und anhand von Ausführungsbeispielen näher beschrieben. Es zeigt:
Fig. 1 eine schematische Ansicht einer Behälterbehandlungsanlage gemäß einem ersten Ausführungsbeispiel der vorliegenden Erfindung;
Fig. 2 eine Draufsicht auf eine Transporteinrichtung in einer Behälterbehandlungsanlage gemäß dem ersten Ausführungsbeispiel der vorliegenden Erfindung;
Fig. 3 eine Draufsicht auf eine Transporteinrichtung in einer Behälterbehandlungsanlage gemäß einer Modifikation des ersten Ausführungsbeispiels der vorliegenden Erfindung;
Fig. 4 eine Seitenansicht eines Transportelements einer Transportbahn der Transporteinrichtung gemäß dem ersten Ausführungsbeispiels der vorliegenden Erfindung;
Fig. 5 eine Draufsicht auf einen Teil einer Transporteinrichtung in einer Behälterbehandlungsanlage gemäß einem zweiten Ausführungsbeispiel der vorliegenden Erfindung;
Fig. 6 eine weitere Ausführungsform einer erfindungsgemäßen Vorrichtung, wobei hier die Transportvorrichtung zwischen einer Blasmaschine und einer Fülleinrichtung angeordnet ist;
Fig. 7 eine weitere Ausgestaltung der in Fig. 6 gezeigten Vorrichtung;
Fig. 8 eine Detaildarstellung eines Greifelements;
Fig. 9 eine Darstellung zur Veranschaulichung einer Dreh- oder Schwenkbewegung; und
Fig. 10 eine weitere Ausgestaltung einer erfindungsgemäßen Vorrichtung.

### (Erstes Ausführungsbeispiel)

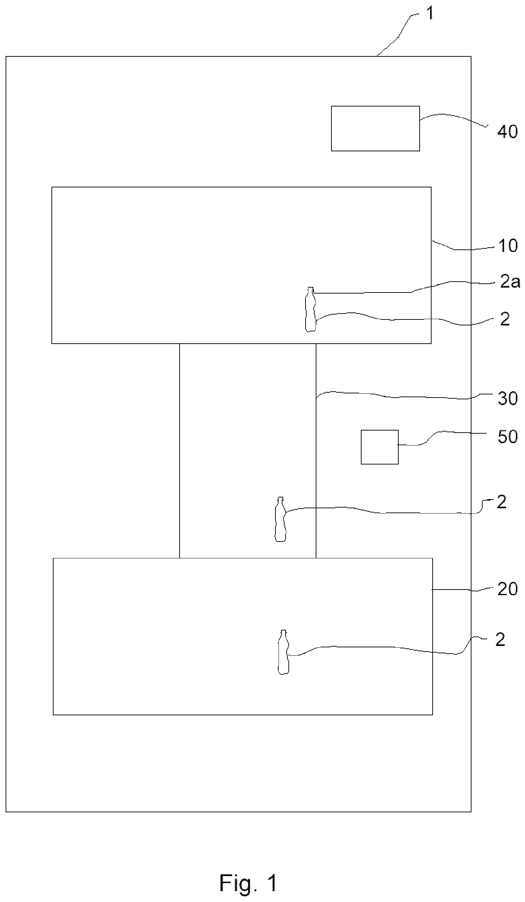

Fig. 1 zeigt eine Behälterbehandlungsanlage 1 zur Behandlung von Behältern 2, die einen Neckring 2a aufweisen. Die Behälterbehandlungsanlage 1 umfasst zumindest eine erste Behandlungsvorrichtung 10, eine zweite Behandlungsvorrichtung 20, eine Transporteinrichtung 30, die zwischen der ersten und zweiten Behandlungsvorrichtung 10, 20 angeordnet ist, eine Steuervorrichtung 40 und eine Erfassungseinrichtung 50.

Die erste Behandlungsvorrichtung 10 dient zur Behandlung von Behältern 2 und kann beispielsweise eine Heizvorrichtung sein, welche Kunststoffvorformlinge auf eine für einen Streckblasvorgang geeignete Temperatur erwärmt. Die zweite Behandlungsvorrichtung 20 dient ebenfalls zur Behandlung von Behältern 2 und kann beispielsweise eine Streckblasvorrichtung sein, welche die von der Heizvorrichtung, der ersten Behandlungsvorrichtung 10, erwärmten Behälter 2 einem Streckblasvorgang unterzieht. Das heißt, die von der ersten und zweiten Behandlungsvorrichtung 10 durchführbare Behandlung von Behältern 2 ist eine vorbestimmte Art von Behandlung.

Die Steuervorrichtung 40 steuert die von der Behälterbehandlungsanlage 1 ausgeführten Behandlungen der Behälter 2 und steuert somit auch Abläufe zwischen der ersten und zweiten Behandlungsvorrichtung 10, 20 und den Betrieb der Transporteinrichtung 30. Gegebenenfalls steuert die Steuervorrichtung 40 auch den Betrieb der ersten und zweiten Behandlungsvorrichtung 10, 20, wenn diese nicht mit einer eigenen Steuereinrichtung ausgestattet sind, welche wiederum der Steuervorrichtung 40 (Master) untergeordnet sind und von ihr gesteuert werden.

Die Erfassungseinrichtung 50 dient zur Erfassung einer Bewegung und/oder Lage von Elementen der Transporteinrichtung 30, wie später noch genauer beschrieben ist.

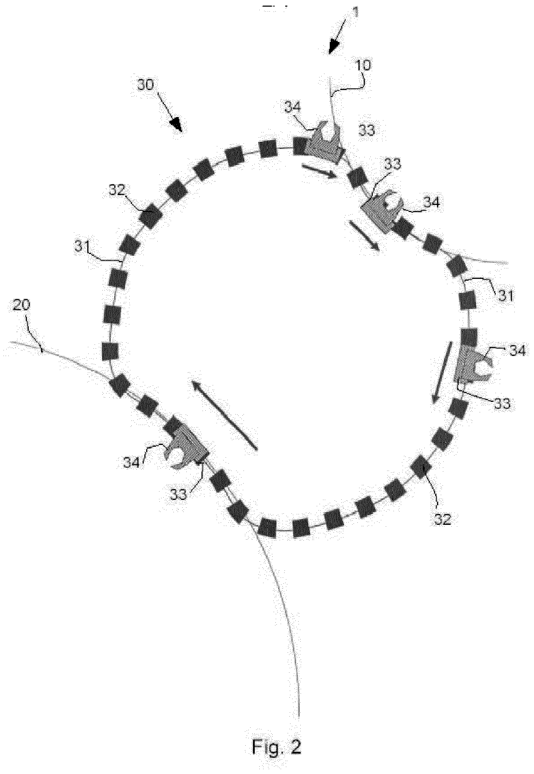

Wie in Fig. 2 dargestellt, hat die zwischen der ersten und zweiten Behandlungsvorrichtung 10, 20 angeordnete Transporteinrichtung 30 eine Transportbahn 31, bei welcher Elektromagnete 32 wie an einer Perlenschnur an der Bahn entlang aufgereiht sind. In Fig. 2 sind der Übersichtlichkeit halber nur einige der Elektromagnete mit Bezugszeichen versehen. An der Transportbahn 31 befinden sich in Fig. 2 vier Transportelemente 33 zum Halten und Transportieren von Behältern. Zum Halten und Transportieren einzelner Behälter 2 sind die Transportelemente in Fig. 2 mit einer Halteklammer 34 versehen. Die Halteklammer 34 greift und hält erfindungsgemäß die Behälter 2, wie beim Stand der Technik beschrieben, über oder unter dem Neckring der Behälter 2. Die Transportelemente 33 mit den Halteklammern 34 bewegen sich auf der Transportbahn in Richtung der in Fig. 2 dargestellten Pfeile. Auch wenn im Folgenden nur von einer Bewegung der Transportelemente 33 gesprochen ist, versteht es sich von selbst, dass sich die Halteklammern 34 mit den Transportelementen 33 bewegen, wenn die Transportelemente 33 die Behälter 2 nicht selbst halten sondern hierzu mit einer Halteklammer 34 zum Halten der Behälter 2 versehen sind.

Die Transportbahn 31 hat in Fig. 2 in etwa die Form eines Apfels, das heißt Anfang und Ende der Transportbahn 31 schließen direkt aneinander an. Anders ausgedrückt, die Transportbahn 31 bildet eine in sich geschlossene kontinuierliche Transportstrecke bzw. Umlaufbahn. Außerdem ist die in sich geschlossene Transportbahn 30 vollständig bzw. auf ihrer gesamten Länge zwischen der ersten und zweiten Behälterbehandlungsvorrichtung 10, 20 angeordnet. Auf diese Weise können die Behälter 2 von der ersten Behälterbehandlungsvorrichtung 10 zu der zweiten Behälterbehandlungsvorrichtung 20 transportiert werden. Zudem müssen die Transportelemente 33 nur einen kurzen Weg zurücklegen, um wieder von der zweiten Behälterbehandlungsvorrichtung 20 zu der ersten Behälterbehandlungsvorrichtung 10 zurückzugelangen, um erneut Behälter 2 von der ersten Behälterbehandlungsvorrichtung 10 zu der zweiten Behälterbehandlungsvorrichtung 20 zu transportieren.

Der Transport der Behälter 2 in der ersten und zweiten Behälterbehandlungsvorrichtung 10, 20 erfolgt beispielsweise mittels herkömmlicher Transportsterne, die in Fig. 2 als Teil eines Kreises angedeutet sind, und an welche die Transportelemente 33 der Transporteinrichtung 30 die Behälter 2 übergeben, wenn sie zu der ersten oder zweiten Behälterbehandlungsvorrichtung 10, 20 gelangen.

Die Transportelemente 33 der Transporteinrichtung 30, bzw. deren Geschwindigkeit, sind von der Steuervorrichtung 40 derart separat steuerbar, dass ein Geschwindigkeitsunterschied eines Transports der Behälter 2 in der ersten und zweiten Behälterbehandlungsvorrichtung 10, 20 ausgleichbar ist. Für diesen Zweck können die Transportelemente 33 an der Transportbahn 31 je nach Bedarf beschleunigt, abgebremst oder auch zeitweise ganz angehalten werden. Daneben wäre auch eine zeitweise Bewegung in der entgegengesetzten Bewegungsrichtung denkbar, beispielsweise zu Pufferungszwecken. Die Transportelemente 33 können auch in einigen Abschnitten der Transportbahn 31 mit einer langsameren Geschwindigkeit v laufen als in anderen Abschnitten.

Vorzugsweise handelt es sich bei den Halteklammern bzw. Greifelementen 34 um aktive d.h. steuerbare Greifelemente, deren Öffnungs- bzw. Schließbewegung steuerbar ist.

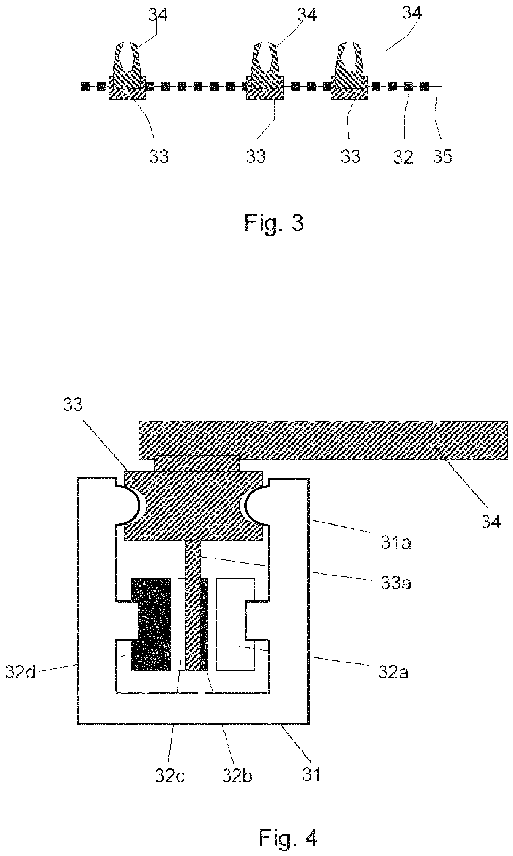

Zudem können die Transportelemente 33 in eine in Fig. 3 gezeigte Pufferstrecke 31 der Transportbahn 31 laufen gelassen werden, wodurch die Dichte der Transportelemente 33 an der Transportbahn 31 verringert werden kann. Damit können die einzelnen Transportelemente 33 mit einer schnelleren oder langsameren Geschwindigkeit v gefahren werden, als wenn alle verfügbaren Transportelemente 33 gleichzeitig an der Transportbahn 31 umlaufen. Das heißt, die Transportelemente 33 können auf ihrem Weg von der ersten zu der zweiten Behälterbehandlungsvorrichtung 10, 20 einen Geschwindigkeitsunterschied zwischen verschiedenen Geschwindigkeiten eines Transports der Behälter 2 ausgleichen, die in der ersten und zweiten Behälterbehandlungsvorrichtung vorhanden sind.

Jedes der Transportelemente 33 kann durch die Steuervorrichtung 40 derart separat gesteuert werden, dass seine Geschwindigkeit an der Transportbahn 31 jeweils den Tangentialgeschwindigkeiten der ersten und zweiten Behälterbehandlungsvorrichtung 10, 20 entspricht. Das heißt, die Transportelemente 33 fahren durch die Steuervorrichtung 40 geregelt um die Transportbahn 31 und werden beschleunigt oder abgebremst.

Hierbei wird vorzugsweise die Ist-Lage eines jeweiligen Transportelements 33 mittels der Erfassungseinrichtung 50 bestimmt, und über eine Regelung einer von der Steuervorrichtung 40 vorgegebenen Soll-Lage angepasst. Zudem kann jedes, oder auch nur ein oder mehrere der Transportelemente 33 an einen an der ersten und zweiten Behandlungsvorrichtung 10, 20 mitlaufenden Anschlag anfahren, um so eine Übergabeposition an der ersten und zweiten Behandlungsvorrichtung 10, 20 ganz genau einzuhalten.

Vorzugsweise handelt es sich bei der Transportbahn 31 um eine Magnettrasse oder Magnetschwebetrasse, an welcher die Transportelemente 33 mittels Magnetkraft bewegt werden und somit jeweils einer auf der Magnettrasse einzeln bewegbaren Magnetbahn oder Magnetschwebebahn entsprechen. Dies wird erreicht, indem die Elektromagnete 32 über die Steuervorrichtung 40 je nach Bedarf gepolt werden, um die Transportelemente 33 mit der gewünschten Geschwindigkeit v an der Bahn zu bewegen.

Die Transportelemente 33 können an der Transportbahn 31 voll magnetisch, also auf einem Luftkissen zwischen Transportbahn 31 und Transportelement 33, auch teilweise magnetisch und teilweise mechanisch mit Gleitlager und/oder Rollen gelagert sein, wie in Fig. 4 veranschaulicht. Hierzu hat die Transportbahn 31 ein Führungselement 31a, an welchem das Transportelement 33 magnetisch und/oder mechanisch gelagert ist. Hierfür ist die Form des Transportelements 33 entsprechend an die Form des Führungselements 31a angepasst. Die mechanische Lagerung mit Rollen ist beispielsweise in der DE 41 33 114 A1 gezeigt.

Zudem ist aus Fig. 4 ersichtlich, dass die Klammer 34 erfindungsgemäß oben an dem Transportelement 33 angeordnet ist, und dass ein unteres Teil 33a des Transportelements 33 an einem der Elektromagnete 32 vorbeigeführt wird, der ein elektromagnetisches Antriebselement ist und aus einem ersten bis vierten elektromagnetischen Antriebselement 32a bis 32d besteht. Das heißt, bei der Transporteinrichtung 30 werden die Transportelemente 33 magnetisch angetrieben.

Auf diese Weise können, wenn in einer Heizeinrichtung als der ersten Behandlungsvorrichtung 10 sehr große Vorformlinge beheizt werden sollen, die Behälter 2 mit einer halb so gro-ßen Geschwindigkeit durch die Heizeinrichtung laufen gelassen werden wie bei normal gro-ßen Vorformlingen. Gleichzeitig kann dann die Streckblasvorrichtung als die zweite Behandlungsvorrichtung 20 den Streckblasvorgang mit gleicher Geschwindigkeit laufen lassen wie bei normal großen Vorformlingen, während jedoch nur jede zweite Blasform mit einem von der Heizvorrichtung, der ersten Behandlungsvorrichtung 10, erwärmten Behälter bestückt wird. Durch eine einfache Abänderung der Steuerung der Transportelemente 33 der Transporteinrichtung 30 können die Transportelemente 33 die in diesem Fall vorhandene Geschwindigkeitsdifferenz zwischen der ersten und zweiten Behandlungsvorrichtung 10, 20 überbrücken.

Die Transporteinrichtung 30 kann entweder als separate Einrichtung zwischen der ersten und zweiten Behandlungsvorrichtung 10 angeordnet sein, oder die Transporteinrichtung 30 kann ein Teil der ersten oder zweiten Behandlungsvorrichtung 10 sein. In dem letzteren Fall ist der Ausdruck "zwischen der ersten und zweiten Behandlungsvorrichtung 10 angeordnet" als "zwischen einer Behandlungseinrichtung der ersten Behandlungsvorrichtung 10 und einer Behandlungseinrichtung der zweiten Behandlungsvorrichtung 20 angeordnet" zu verstehen, da die erste und zweite Behandlungsvorrichtung 10, 20 auch jeweils Transportsterne oder geradlinige Transportstrecken aufweisen können, welche die Behälter 2 zu der eigentlichen Behandlungseinrichtung der Behandlungsvorrichtung hin und dann wieder weg führen.

Bei dem ersten Ausführungsbeispiel ist eine Transporteinrichtung 30 in einer Behälterbehandlungsanlage 1 gezeigt, welche für den Transport von Behältern 2 keinem starren Weg-Zeit Profil unterliegt, sondern bei der für den Transport von Behältern 2 ein variables Weg-Zeit Profil gilt. Zudem ist die Form der Transportbahn 31 beliebig und die Transportbahn 31 und gegebenenfalls eine oder mehrere Pufferstrecken brauchen nur so lang zu sein, wie für eine Überbrückung der Geschwindigkeitsdifferenz zwischen der ersten und zweiten Behälterbehandlungsvorrichtung 10, 20 erforderlich ist. Somit ist die Transporteinrichtung 30 sehr kostengünstig.

### (Zweites Ausführungsbeispiel)

Die Transporteinrichtung 30 gemäß dem zweiten Ausführungsbeispiel hat die gleichen Teile, wie in Fig. 1 bis Fig. 4 gezeigt. Daher sind gleiche und gleichbedeutende Teile in beiden Ausführungsbeispielen mit den gleichen Bezugszeichen bezeichnet.

Der Unterschied zwischen dem ersten und zweiten Ausführungsbeispiel besteht darin, dass bei dem vorliegenden Ausführungsbeispiel der Antrieb der Transportelemente 33 auf der Transportbahn 31 nicht nur rein elektromechanisch über Elektromagnete 32 erfolgt. Somit ist im Folgenden nur dieser Unterschied beschrieben.

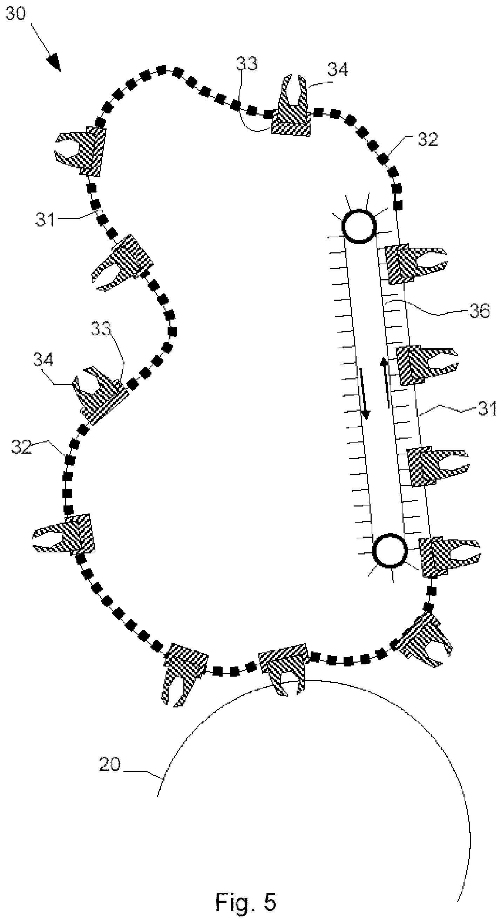

Zusätzlich zu dem Antrieb der Transportelemente 33 auf der Transportbahn 31 mittels Elektromagneten 32 kann der Antrieb der Transportelemente 33 auf geraden Strecken der Transportbahn 31 mit einem in Fig. 5 dargestellten Band 36 angetrieben werden. Dies ist insbesondere bei längeren geraden Strecken vorteilhaft, auf denen sich die Transportelemente 33 mit konstanter Geschwindigkeit v bewegen.

Die Steuervorrichtung 40 kann dann je nach Bedarf die Geschwindigkeit des Bandes 36 relativ zu der Geschwindigkeit der Transportelemente 33 in den anderen Abschnitten der Transportbahn 31 festlegen.

Da die Kosten für ein Band 36 zum Antrieb der Transportelemente 33 an der Transportbahn 31 im Allgemeinen geringer sind als die Ausstattung der Transportbahn 31 mit Elektromagneten 32 zum Antrieb der Transportelemente 33 an der Transportbahn 31, können auf diese Weise die Kosten für die Transporteinrichtung 30 weiter reduziert werden.

### (Allgemeines)

Alle zuvor beschriebenen Ausgestaltungen der Transporteinrichtung, der Behälterbehandlungsanlage und des Transportverfahrens können einzeln oder in allen möglichen Kombinationen Verwendung finden. Hierbei sind insbesondere folgende Modifikationen denkbar.

Die Form der Transportbahn 31 ist grundsätzlich beliebig. Daher kann die Transportbahn 31 alternativ zu der in Fig. 2 gezeigten Form auch beispielsweise die Form eines Kreises, eines Rechtecks oder Quadrats mit vorzugsweise abgerundeten Ecken, einer Ellipse, einer Spirale, einer Acht, usw. haben. Insbesondere kann die Transportbahn 31 auch ein längeres gerades Stück überbrücken oder auch eine Spirale. Die Transportbahn 31 kann insbesondere eine vertikale und horizontale Wegänderung vollziehen. Hierbei sind auch alle möglichen Kombinationen dieser und anderer denkbaren Formen realisierbar.

Die Anzahl der Transportelemente 33 an der Transportbahn 31 ist beliebig, solange nur mindestens ein Transportelement 33 vorhanden ist. Vorzugsweise wird die Länge der Transportbahn 31 auf die Anzahl der Transportelemente 33 abgestimmt, um in der Behälterbehandlungsanlage 1 vorhandene Geschwindigkeitsunterschiede zwischen einem Transport von Behältern 2 in den einzelnen Behälterbehandlungsvorrichtungen 10, 20 ausgleichen zu können.

Bei den Behältern 2 kann es sich um Vorformlinge, um aus Vorformlingen durch einen Streckblasvorgang hergestellte Kunststoffbehältnisse, beispielsweise Kunststoffflaschen, um Glasflaschen, um Dosen usw. handeln. Es ist aber auch möglich, dass es sich bei den Behältern 2 um bereits auf Paletten gepackte Behälter 2 handelt. In jedem Fall sind die Transportbahn 31 und die Transportelemente 33 an die jeweils zu transportierende Last anzupassen. Zudem können die Halteelemente für die Behälter 2 gegebenenfalls nicht als Halteklammern 34 sondern beispielsweise als Haken ausgeführt werden, in welche ein um die Paletten gelegtes Transportband gelegt werden kann. Es ist auch möglich, die Halteelemente für die Behälter 2 anstelle der Halteklammern 34 als Greifer in beispielsweise Gabelform auszugestalten, welche in die Paletten greifen können. Die Behälter müssen auch nicht mit einem Neckring 2a ausgebildet sein, wie beispielsweise Konservendosen. In einem solchen Fall ist die Halteklammer 34 geeignet zu gestalten und beispielsweise mit einer rutschhemmenden Beschichtung zu versehen.

Die erste Behälterbehandlungsvorrichtung 10 kann anstelle einer Heizvorrichtung auch eine Reinigungsvorrichtung zum Reinigen der Behälter 2 sein, während die zweite Behälterbehandlungsvorrichtung 20 anstelle einer Streckblasvorrichtung eine Füllvorrichtung zum Füllen der Behälter mit beispielsweise einer Flüssigkeit, insbesondere einem Getränk, ist. Als eine weitere Möglichkeit kann die erste Behälterbehandlungsvorrichtung 10 auch eine Streckblasvorrichtung sein, während die zweite Behälterbehandlungsvorrichtung 20 eine Etikettiervorrichtung zum Etikettieren der Behälter 2 ist. Es ist auch möglich, dass es sich bei der ersten und zweiten Behandlungsvorrichtung 10, 20 jeweils um eine Reinigungsvorrichtung handelt, die gegebenenfalls verschiedene Reinigungen der Behälter durchführen. Die erste und zweite Behandlungsvorrichtung 10, 20 können auch jeweils Etikettiervorrichtungen sein. Hierbei sind auch alle anderen Kombinationen von Behandlungsvorrichtungen einer Behandlungsanlage 1 denkbar.

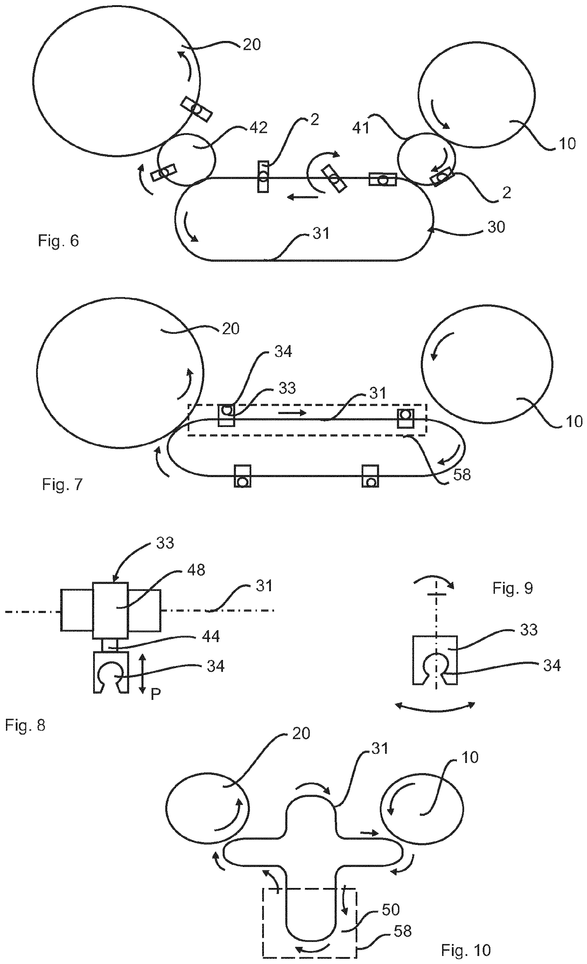

Figur 6 zeigt eine weitere Ausgestaltung einer erfindungsgemäßen Vorrichtung. Dabei ist hier die erste Behandlungsvorrichtung 10 eine Blasmaschine und insbesondere eine Streckblasmaschine 10, welche Kunststoffvorformlinge zu Kunststoffbehältnissen umformt. Dieser Blasmaschine ist dabei vorteilhaft ein Ofen vorgeschaltet, durch den die Kunststoffvorformlinge hindurchgeführt und auf diese Weise erwärmt werden. Das Bezugszeichen 41 kennzeichnet einen Transferstern, der die Behältnisse 2 der Transporteinrichtung 30 zuführt und das Bezugszeichen 42 einen weiteren Transferstern, der die Behältnisse der zweiten Behandlungsvorrichtung 20 zuführt. Bei dieser Ausgestaltung weisen die Behältnisse einen Querschnitt auf, der von einem kreisförmigen Querschnitt abweicht. Man erkennt, dass die Behältnisse in einem Längslauf der Fördereinrichtung 30 zugeführt und innerhalb der Fördereinrichtung, d.h. entlang des Transportpfades, um 90° gedreht werden und um anschließend im Querlauf der zweiten Behandlungsvorrichtung 20, d.h. hier dem Füller, zugeführt zu werden. Damit findet hier ein Lineartransport mit Drehung statt.

Figur 7 zeigt eine weitere Ausgestaltung einer erfindungsgemäßen Vorrichtung. Dabei sind hier auch insbesondere wiederum die Transportelemente 33 erkennbar, die hier jeweils Greifelemente 34 zum Greifen der Behältnisse aufweisen. Bei der hier gezeigten Ausführungsform werden die Behältnisse im Uhrzeigersinn transportiert, d.h. hier nicht entlang der denkbar kürzesten Strecke zwischen der ersten Behandlungsvorrichtung 10 und der zweiten Behandlungsvorrichtung 20. Dies kann insbesondere gewollt sein, wenn während des Transports der Behältnisse noch eine Behandlung derselben erfolgen soll. Vorteilhaft ist ebenfalls, dass keine zusätzlichen Transfersterne (41, 42) wie in Fig. 6 gezeigt, erforderlich sind, bzw. die Vorrichtung ohne weitere Transfersterne auskommt.

Figur 8 zeigt eine Detaildarstellung eines Transportelements 33, welches gegenüber der (schematisch dargestellten) Transportbahn 31 bewegt wird. Dabei ist insbesondere ein Träger 44 vorgesehen, an dem das Greifelement 34 angeordnet ist. Das Bezugszeichen 48 kennzeichnet einen Linearantrieb, mit dessen Hilfe das Greifelement 34 entlang des Doppelpfeils P bewegbar ist. Durch diese lineare Bewegbarkeit des Greifelements kann insbesondere auch eine Übergabe der Behältnisse an die zweite Behandlungsvorrichtung oder auch eine Übernahme der Behältnisse von der ersten Behandlungsvorrichtung 10 erleichtert werden.

Figur 9 zeigt eine weitere Ausgestaltung, wobei hier das Greifelement 34 entlang des Doppelpfeils P1 schwenkbar bzw. drehbar ist. Zu diesem Zwecke kann ein Drehantrieb 54 (nur schematisch gezeigt) vorgesehen sein, mit dessen Hilfe das Greifelement 34 um eine Schwenkachse S geschwenkt werden kann. In dieser Gestaltung wird das Verhältnis selbst zwar nicht um seine zentrale Längsachse geschwenkt, sondern um eine hierzu parallele Achse. Er wäre jedoch auch möglich, dass das Greifelement 34 so drehbar ist, dass auch eine Drehung des Behältnisses um seine eigene Achse erfolgt. Anstelle der hier gezeigten Greifelemente wäre es auch möglich, dass Haltearme vorgesehen sind, welche in eine Mündung der Behältnisse eingreifen, um diese so zu transportieren. Auch derartige Haltearme können dabei drehbar, beispielsweise mittels Servomotoren, angeordnet sein.

Figur 10 zeigt eine weitere Ausgestaltung der vorliegenden Erfindung. Bei dieser Ausgestaltung ist eine weitere Behandlungseinrichtung 50, wie insbesondere ein Zusatzaggregat vorgesehen. Bei diesem Zusatzaggregat kann es sich beispielsweise um eine Kühleinrichtung, eine Inspektionseinrichtung, eine Ausrichteinheit, eine Sterilisationseinrichtung oder dergleichen handeln. Man erkennt, dass die Transportbahn hier erheblich verlängert ist, um die Behältnisse auch durch diese weitere Behandlungseinrichtung 50 zu transportieren. Diese weitere Behandlungseinrichtung 50 kann dabei einen Sterilraum 58 aufweisen, sodass die Behältnisse auch in diesem Sterilraum transportiert werden. Ähnlich erkennt man auch in Figur 6 einen (nur schematisch dargestellten) Sterilraum 58, durch welchen hindurch die Behältnisse geführt werden. Wie oben ausgeführt, kann sich dieser Sterilraum auch über die gesamte Länge der Transportbahn 31 erstrecken. Weiterhin wäre es auch möglich, dass spezielle Sterilisationseinrichtungen vorgesehen sind, die dazu dienen, um die Greifelemente regelmäßig zu sterilisieren, beispielsweise durch Beaufschlagung mit einem Sterilisationsmedium.

### Bezugszeichenliste

- 1: Behälterbehandlungsanlage
- 2: Behälter
- 2a: Neckring
- 10: erste Behandlungsvorrichtung
- 20: zweite Behandlungsvorrichtung
- 30: Transporteinrichtung
- 31: Transportbahn
- 31a: Führungselement
- 32: Elektromagnet
- 32a: erstes elektromagnetisches Antriebselement
- 32b: zweites elektromagnetisches Antriebselement
- 32c: drittes elektromagnetisches Antriebselement
- 32d: viertes elektromagnetisches Antriebselement
- 33: Transportelement
- 33a: unteres Teil von Transportelement 33
- 34: Halteklammer, Greifelement
- 35: Pufferstrecke
- 36: Band
- 40: Steuervorrichtung
- 41, 42: Transferstern
- 44: Träger
- 48: Linearantrieb
- 50: Behandlungseinrichtung
- 54: Drehantrieb
- 58: Reinraum
- P, P1: Doppelpfeil
- S: Schwenkachse

## Patentansprüche

1. Behälterbehandlungsanlage (1), mit
einer ersten Behälterbehandlungsvorrichtung (10) zur Behandlung von Behältern (2),
einer zweiten Behälterbehandlungsvorrichtung (20), welche nach der ersten Behandlungsvorrichtung (20) angeordnet ist und zur Behandlung der Behälter (2) nach einer Behandlung durch die erste Behälterbehandlungsvorrichtung (10) dient, und eine Transporteinrichtung (30) zum Transport von Behältern (2) in der Behälterbehandlungsanlage (1), mit
einer Transportbahn (31), die mit ihrer gesamten Länge zwischen der ersten und zweiten Behälterbehandlungsvorrichtung (10, 20) angeordnet ist und entlang welcher die Behälter (2) von der ersten Behälterbehandlungsvorrichtung (10) zu der zweiten Behälterbehandlungsvorrichtung (20) transportierbar sind, und
und weiter wobei die Transporteinrichtung (30)
eine Vielzahl von Transportelementen (33) aufweist, welche an der Transportbahn (31) bewegbar angeordnet ist, zum Halten und Transportieren eines Behälters (2), wobei die Transportbahn (31) und die Transportelemente (33) derart ausgestaltet sind, dass die Transportelemente (33) auf ihrem Weg zwischen der ersten und zweiten Behälterbehandlungsvorrichtung (10, 20) wenigstens zeitweise einen Geschwindigkeitsunterschied eines Transports der Behälter (2) in der ersten und zweiten Behälterbehandlungsvorrichtung (10, 20) ausgleichen können, wobei die Transportbahn (31) mit Wicklungen versehen ist, die einzeln ansteuerbar sind und die Transportelemente (33) mit einem Dauermagneten ausgerüstet sind, wodurch das Transportelement (33) zumindest zeitweise mittels einer magnetischen Kraft antreibbar ist, und wobei die Bewegungen der Transportelemente (33) bezüglich der Transportbahn (31) unabhängig voneinander steuerbar sind,
**dadurch gekennzeichnet, dass**
zum Halten und Transportieren einzelner Behälter (2) die Transportelemente (33) jeweils mit einer oben an dem Transportelement (33) angeordneten Halteklammer (34) versehen sin, und dass ein unteres Teil (33a) des Transportelements (33) an einem der Elektromagnete (32) vorbeigeführt wird, der ein elektromagnetisches Antriebselement ist und aus zumindest einem der ersten bis vierten elektromagnetischen Antriebselement (32a) bis (32d) besteht. wobei die Halteklammern (34) die Behälter über oder unter dem Neckring der Behälter (2) greifen und halten.

2. Behälterbehandlungsanlage (1) nach Anspruch 1, wobei die Transportbahn (31) mindestens eine Pufferstrecke umfasst, in welche mindestens eins des mindestens einen Transportelements (33) laufen kann, um die Dichte der Transportelemente (33) an der Transportbahn (31) zu verändern.

3. Behälterbehandlungsanlage (1) nach wenigstens einem der vorangegangenen Ansprüche, wobei die Transportbahn (31) als Magnetschwebetrasse einer Magnetschwebebahn ausgebildet ist.

4. Behälterbehandlungsanlage (1) nach einem der vorangehenden Ansprüche, wobei die Transporteinrichtung (30) zudem ein Band zum Antrieb des mindestens einen Transportelements (33) an Strecken der Transportbahn (31) aufweist, an welchen das mindestens eine Transportelement (33) mit konstanter Geschwindigkeit bewegt wird.

5. Behälterbehandlungsanlage (1) nach einem der vorangehenden Ansprüche, wobei die Transportbahn (31) eine beliebige Form hat.

6. Behälterbehandlungsanlage (1) nach einem der vorangegangenen Ansprüche,
**dadurch gekennzeichnet, dass**
die Transporteinrichtung (30) eine Dreheinrichtung aufweist, welche die Behältnisse bezüglich deren Längsachse um einen vorgegebenen Drehwinkel dreht.

7. Behälterbehandlungsanlage (1) nach einem der vorangegangenen Ansprüche,
**dadurch gekennzeichnet, dass**
entlang der Transportbahn eine oder mehrere weitere Behandlungseinrichtungen (50) seriell und/oder parallel für Behältnisse angeordnet sind.

8. Behälterbehandlungsanlage (1) nach einem der vorangegangenen Ansprüche,
**dadurch gekennzeichnet, dass**
ein zusätzlicher Antrieb auf einem Transportelement vorgesehen ist.

9. Transportverfahren zum Transport von Behältern in einer Behälterbehandlungsanlage (1) nach Anspruch 1, die eine erste Behälterbehandlungsvorrichtung (10) zur Behandlung von Behältern (2) und eine zweite Behälterbehandlungsvorrichtung (20) aufweist, welche nach der ersten Behandlungsvorrichtung (10) angeordnet ist und zur Behandlung der Behälter (2) nach einer Behandlung durch die erste Behälterbehandlungsvorrichtung (10) dient, mit den Schritten
Transportieren der Behälter (2) entlang einer Transportbahn (31), die mit ihrer gesamten Länge zwischen der ersten und zweiten Behälterbehandlungsvorrichtung (10, 20) angeordnet ist, von der ersten Behälterbehandlungsvorrichtung (10) zu der zweiten Behälterbehandlungsvorrichtung (20) mittels einer Vielzahl von Transportelementen (33), welche an der Transportbahn (31) bewegbar gelagert sind und jeweils einen Behälter (2) halten können, und
Ausgleichen eines Geschwindigkeitsunterschieds eines Transports der Behälter (2) in der ersten und zweiten Behälterbehandlungsvorrichtung (10, 20) auf dem Weg zumindest eines Transportelements (33) zwischen der ersten und zweiten Behälterbehandlungsvorrichtung (10, 20).

## Claims

1. Container treatment system (1) with
a first container treatment apparatus (10) for treating containers (2),
a second container treatment apparatus (20) that is disposed downstream of the first treatment apparatus (10) and is used for treating the containers (2) following a treatment by the first container treatment apparatus (10),
a transport unit (30) for transporting containers (2) in the container treatment system (1) with
a transport path (31) which is arranged over its entire length between the first and second container treatment apparatus (10, 20) and along which the containers (2) can be transported from the first container treatment apparatus (10) to the second container treatment apparatus (20), and wherein the transport unit (30) further comprises
a plurality of transport members (33) movably mounted on the transport path (31) for holding and transporting a container (2), wherein the transport path (31) and the transport members (33) are designed in such a way that the transport members (33) can compensate on their path between the first and second container treatment apparatus (10, 20) at least at times a difference in transport speed of the containers (2) in the first and second container treatment apparatus (10, 20), wherein the transport path (31) is provided with windings which can be driven individually and the transport members (33) are provided with a permanent magnet by which the transport member (33) can be driven by means of a magnetic force at least at times, and wherein the movement of the transport members (33) with respect to the transport path (31) can be controlled independently from each other,
**characterised in that**
the transport members (33) are in each case provided with a retaining clamp (34) arranged on top of the transport member (33) for holding and transporting individual containers (2) and that a lower part (33a) of the transport member (33) is guided past one of the electromagnets (32) which is an electromagnetic drive member and consists of at least one of the first to fourth electromagnetic drive members (32a) to (32d), wherein the retaining clamps (34) grab and hold the containers above or below a neck ring of the containers (2).

2. Container treatment system (1) as claimed in claim 1, wherein the transport path (31) comprises at least one buffer section, in which at least one of the transport members (33) can run, in order to modify the density of the transport members (33) along the transport path (31).

3. Container treatment system (1) as claimed in at least one of the preceding claims, wherein the transport path (31) is formed as a magnetic levitation route of a magnetic levitation train.

4. Container treatment system (1) as claimed in any one of the preceding claims, additionally including a belt for driving the at least one transport member (33) in sections of the transport path (31), on which the at least one transport member (33) is moved at a constant speed.

5. Container treatment system (1) as claimed in any one of the preceding claims, wherein the transport path (31) has any desired shape.

6. Container treatment system (1) as claimed in any one of the preceding claims,
**characterised in that**
the transport unit (30) includes a turning unit that rotates the containers in relation to the longitudinal axis thereof about a predetermined turning angle.

7. Container treatment system (1) as claimed in any one of the preceding claims,
**characterised in that**
one or several further treatment units (50) for containers are arranged in series and/or parallel along the transport path.

8. Container treatment system (1) as claimed in any one of the preceding claims,
**characterised in that**
an additional drive is provided on a transport member.

9. A transport method for transporting containers in a container treatment system (1), as claimed in claim 1, comprising a first container treatment apparatus (10) for treating containers (2) and a second container treatment apparatus (20) that is disposed downstream of the first treatment apparatus (10) and is used for treating the containers (2) following a treatment by the first container treatment apparatus (10), including the steps
transporting the containers (2) along a transport path (31) arranged over its entire length between the first and second container treatment apparatus (10, 20) from the first container treatment apparatus (10) to the second container treatment apparatus (20) by means of a plurality of transport members (33) which are supported so as to be movable along the transport path (31) and that can hold a container (2) in each case, and
compensating a difference in transport speed of the containers (2) in the first and second container treatment apparatus (10, 20) on the path of at least one transport member (33) between the first and second container treatment apparatus (10, 20).

## Revendications

1. Installation de traitement de contenants (1), comprenant
un premier dispositif de traitement de contenants (10) destiné à traiter des contenants (2),
un deuxième dispositif de traitement de contenants (20), lequel étant agencé en aval du premier dispositif de traitement de contenants (10) et servant à traiter les contenants (2) une fois que ces derniers ont pu être traités par le premier dispositif de traitement de contenants (10),
et un dispositif de transport (30) pour le transport de contenants (2) vers l'installation de traitement de contenants (1), avec
un chemin de transport (31) agencé sur toute sa longueur entre le premier et le deuxième dispositif de traitement de contenants (10, 20) et le long duquel les contenants (2) pouvant être transportés du premier dispositif de traitement de contenants (10) au deuxième dispositif de traitement de contenants (20), et dans lequel le dispositif de transport (30) comprenant en outre
une pluralité d'éléments de transport (33), lesquels sont agencés mobiles sur le chemin de transport (31) pour maintenir et transporter un contenant (2), dans laquelle le chemin de transport (31) et les éléments de transport (33) sont conçus de telle sorte que les éléments de transport (33) peuvent compenser sur leur trajet entre le premier et le deuxième dispositif de traitement de contenants (10, 20) au moins par intermittence une différence de vitesse d'un transport des contenants (2) dans le premier et le deuxième dispositif de traitement de contenants (10, 20), dans laquelle le chemin de transport (31) pouvant être pourvue d'enroulements qui pouvant être commandés individuellement et les éléments de transport (33) étant équipés d'un aimant permanent, de sorte que l'élément de transport (33) pouvant être entraîné au moins par intermittence au moyen d'une force magnétique, et dans laquelle les déplacements des éléments de transport (33) par rapport au chemin de transport (31) pouvant être commandés indépendamment les uns des autres,
**caractérisé en ce que**
pour maintenir et transporter les différents contenants (2), les éléments de transport (33) sont pourvus chacun d'une pince de maintien (34) agencée sur la partie supérieure de l'élément de transport (33), et **en ce qu'**une partie inférieure (33a) de l'élément de transport (33) est amenée à passer devant l'un des électroaimants (32), qui est un élément d'entraînement électromagnétique et qui est constitué d'au moins l'un des premier à quatrième éléments d'entraînement électromagnétiques (32a) à (32d), dans laquelle les pinces de maintien (34) saisissent les contenants par le dessus ou le dessous du col des contenants (2) et les maintiennent.

2. Installation de traitement de contenants (1) selon la revendication 1, dans laquelle le chemin de transport (31) comprend au moins un parcours tampon dans lequel au moins un des éléments de transport (33) peut circuler, afin de modifier la densité des éléments de transport (33) sur le chemin de transport (31).

3. Installation de traitement de contenants (1) selon au moins une des revendications précédentes, dans laquelle le chemin de transport (31) est réalisée sous la forme d'une sustentation magnétique d'une bande à sustentation magnétique.

4. Installation de traitement de contenants (1) selon l'une quelconque des revendications précédentes, le dispositif de transport (30) comprenant en outre une courroie destinée à entraîner au moins un élément de transport (33) sur des parcours du chemin de transport (31) sur lesquels le au moins un élément de transport (33) est déplacé à vitesse constante.

5. Installation de traitement de contenants (1) selon l'une quelconque des revendications précédentes, dans laquelle le chemin de transport (31) présente une forme quelconque.

6. Installation de traitement de contenants (1) selon l'une quelconque des revendications précédentes,
**caractérisée en ce que**
le dispositif comprend un système de rotation, lequel amène les contenants en rotation par rapport à leur axe longitudinal autour d'un angle de rotation prédéfini.

7. Installation de traitement de contenants (1) selon l'une quelconque des revendications précédentes,
**caractérisée en ce que**
un ou plusieurs autres dispositifs de traitement (50) sont agencés en série et/ou en parallèle pour des contenants le long du chemin de transport.

8. Installation de traitement de contenants (1) selon l'une quelconque des revendications précédentes,
**caractérisée en ce que**
un entraînement supplémentaire est prévu sur un élément de transport.

9. Procédé de transport destiné à transporter des contenants dans une installation de traitement de contenants (1) selon la revendication 1, qui comprend un premier dispositif de traitement de contenants (10) destiné à traiter des contenants (2) et un deuxième dispositif de traitement de contenants (20), lequel est agencé en aval du premier dispositif de traitement de contenants (10) et sert à traiter les contenants (2) une fois que ces derniers ont pu être traités par le premier dispositif de traitement de contenants (10), comprenant les étapes de
transport des contenants (2) le long d'un chemin de transport (31), qui est agencée sur toute sa longueur entre le premier et le deuxième dispositif de traitement de contenants (10, 20), du premier dispositif de traitement de contenants (10) au deuxième dispositif de traitement de contenants (20) au moyen d'une pluralité d'éléments de transport (33), lesquels sont agencés mobiles sur le chemin de transport (31) et peuvent maintenir chacun un contenant (2), et
compenser une différence de vitesse d'un transport des contenants (2) dans le premier et le deuxième dispositif de traitement de contenants (10, 20) sur le trajet d'au moins un élément de transport (33) entre le premier et le deuxième dispositif de traitement de contenants (10, 20).
